# EUROPEAN PATENT APPLICATION

(11) **EP 2 937 824 A1**
(43) Date of publication of application: **28.10.2015**
(21) Application number: 14165377.4
(22) Date of filing: 22.04.2014
(51) Int. Cl.: G06Q 10/00

(54) **System and method for evaluating the credibility of news emerging in social networks for information and news reporting purposes**

(71) Applicant: Athens Technology Center S.A., 15233 Athens (GR)
(72) Inventor: The designation of the inventor has not yet been filed

(57) **Abstract**

A system for the evaluation of the use of social networks for informational purposes. The system consists of a Natural Language Processing (NLP) engine, a network analytics engine, a storage layer capable of handling big-data and an integration sub-system which interconnects it with external social networks. The method includes the valuation of the social networks users and the validation of the content which is shared by them. A wide array of metrics is introduced to quantify the measured characteristic properties that are identified. The metrics are analyzed according to the measured pillar (contributor, content, context) and evaluated with the use of data structures internal to the system, as well as known NLP techniques (for classification, clustering, topics modeling, events identification, sentiment analysis etc.) and networked service requests (API calls). The calculated values for each metric are reduced to an index by fitting the data to the appropriate distribution (as calculated by the networks analytics engine), eventually resulting in an index value for each of the system metrics. The solution employs the most complete array of metrics compared to the state of the art and the processing it performs makes it particularly practical.

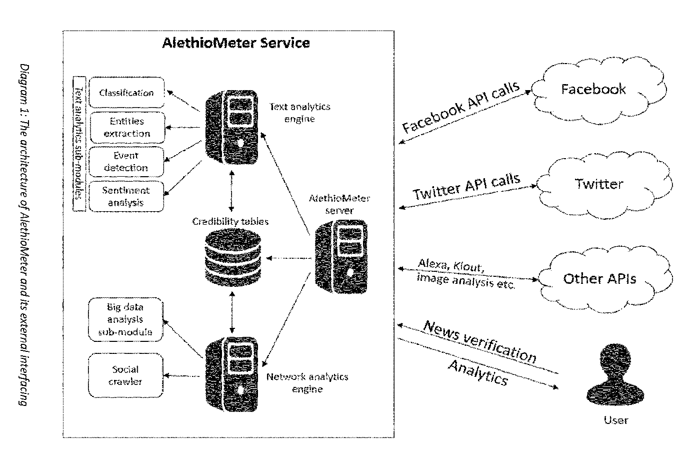

## Description

### Field of the Invention

The present invention refers to a system for the evaluation of the use of social networks for informational purposes. It includes a method to assess social networks users and validate content emerging in the social networks as shared by these users. The invention relates to the field of social networks analytics and it aims to deduce conclusions concerning the validity of both the users and the shared content in the context of informational posting and citizens' journalism.

### Background of the Invention

Experience shows that the increasing growth of online social networks changes the nature of journalism as a large fraction of users of conventional media -such as printed newspapers, television, radio etc.- turn to them for their information. The latest research confirms this experience: The so-called "news consumers" i.e. people that follow news closely, increasingly prefer the online social networks over traditional media. This is because of two main reasons: First because of their direct, instant nature and second because people tend to trust all the more the news filtering performed collectively by their social circle rather than centrally by corporate media entities. The shared content may either be primary (events to which the user claims to be a direct witness) occurring mainly in social networks with distinct journalistic character (e.g. Twitter), or reposting of media and blogs content. However the evident turn to social media for informational purposes also facilitates the spread of rumors and false news. Many prominent media organizations now incorporate special working groups or even departments charged exclusively with monitoring and confirming news that emerge in the social networks sphere. They consider the short period just after the emergence of the news and before it spreads to be extremely critical for its confirmation. Confirming news on the social networks is a complex process involving many metrics for which it is difficult to collect and evaluate data, especially inside this critical first period.

There currently exist many applications on the internet which perform some kind of user and content evaluation analysis, usually limited according to the functionalities they provide. Some of the most popular such tools are presented in categories below:
- Aggregation, curation and customization of content: Applications that provide with a customized presentation of news, according to each user's preferences. The process of news selection may be based either on user filters, automatic recommendations or a combination of the two techniques. This category includes Sulia, CMS Reporter Kit, Storyful, Whipenews and Flumes.
- Fact-checking: Applications that allow citizens to check whether authorities, politicians and the government (mainly in the USA) are consistent with their promises or announcements. This category includes Politifact and FactCheck.
- Digital image analysis: Applications that mainly process images to detect whether they are original or have gone through some kind of alternation, but which also include other relevant functionalities such as image-based search etc. This category includes: TinEye, FotoForensics and Google Search Engine.
- Social networks search and analysis: Applications that provide analytics on social networks. This category includes MentionMap, BottleNose, BingElections and SocialMentions.
- Reputation management: Marketing-oriented applications that allow users to monitor social networks in order to monitor posts which refer to products, companies, or other related entities (organizations, clients etc). This category includes WebLyzard and Trackur.

To achieve these functionalities some of the abovementioned applications quantify specific properties that characterize the use of social networks, e.g. a user's reputation, popularity and influence. The valuation of each such property is achieved by evaluating specific parameters. Typically each application evaluates a certain number of parameters, depending on the functionalities it provides. Depending on the functionality, some applications employ techniques such as named entity extraction, sentiment analysis and other similar techniques on top of natural language processing. Named entity extraction enables extracting subjects, events, persons or products that are mentioned in the analysed text and sentiment analysis refers to deducing whether the text refers to the extracted entities in a positive or negative way. The array of metrics used by these applications is usually narrow, restricted to properties that interest them, as described previously. In contrast, the model created by this invention quantifies a wide array of properties and presents them to the user. In addition it provides with the functionality to allow verification of the news.

### Summary of the Invention

The system and method presented here evaluates and confirms news emerging in a social network through a systematic analysis and valuation of a wide array of metrics, to a level beyond the state of the art, as described in the claims.

For this reason the novel "triple-C" system is introduced, which employs an array of metrics categorized in three pillars:
*Contributor -* Metrics of this pillar include all data relevant to the source of information, such as its history, its connections and interactions in the social circle and any other information that can assist in the profiling of any contributor of content.
*Content -* This includes all multimedia and other content analysis methods that can provide clues about the trustworthiness of the content, also indicating possible manipulations and fraudulent use.
*Context -* Under this pillar we investigate all contextual co-occurrences which strengthen or weaken the confidence built around several concepts like credibility and suspicious behavior.

More particularly a high level description of the metrics assessed by our system are summarized in the following table.

| | | |
|---|---|---|
| **Table-1: Contributor** | **Reputation** | **What do people think of this source of information?** |
| | | Analyse comments towards a given source of information in the course of time, in order to discover sentiments and opinions towards this source. Use crowdsourcing and gamification mechanisms to trigger higher participation for comments and opinion sharing. |
| | **History** | **What is the past activity of this source?** |
| | | Information about how active a given source is on different social media platforms, also combining it with validity information (when did this source appear in social media, how frequently has it been posting, what is the validity of previous posts based on other members' opinions?). |
| | **Popularity** | **Who cares about this source?** |
| | | Information about how many and what kind of people are following the activity of this source, and how many are reading or are recommending this activity to others. |
| | **Influence** | **What happens because of this source?** |
| | | How much does this source trigger activities, such as re-posts, discussions or comments? Are things happening because of what this source is posting? |
| | **Presence** | **What kind of source is this?** |
| | | Information about the type of source (e.g., individual, organization, officially verified account, fake identity, etc.). Is the same source present on multiple social media platforms? |

| | | |
|---|---|---|
| **Table-2: Content** | **Reputation** | **What is the reputation of linked web content?** |
| | | Do the linked web addresses (if the posts contain links to web content) lead to reputable sites? (e.g., in terms of domain reputation, page rank, or properties of the contributors to the content). What do other people think of this linked web content (does it have a high readership? Quality of destination? Can we find positive or negative comments?) |
| | **Provenance** | **What is the history of linked web content? Can we trace the original occurrence of the content and its whole path across sources, places and time?** |
| | | Information about the origin, update rate and freshness (or age) of the linked content. |
| | **Popularity** | **Who is interested in this content?** |
| | | Information about how many and what kind of people are following this content. |
| | **Influence** | **What happens because of this content?** |
| | | Analyse if this content is triggering discussions in the social sphere and what actions are taking place after the posting of this content. |
| | **Originality** | **Has the same content been used in the past?** |
| | | Check whether the content or parts thereof have been used in the past (e.g., reused text or images that have appeared in the past). |
| | **Authenticity** | **Has the content been tampered with?** |
| | | Check whether the content has been changed with respect to its original state (e.g., changed text or attached multimedia content). |
| | **Objectivity and Diversity** | **Are views presented from all sides?** |
| | | Does an article (in case of linked web content) present views from all involved sides? How different are the opinions found for people, content, or general entities? |

| | | |
|---|---|---|
| **Table-3: Context** | **Cross-checking** | **Are there multiple similar reports?** |
| | | Are there many different and independent reports / mentions etc. about the same thing? |
| | **Coherence** | **Is the content internally and externally coherent?** |
| | | Information about the coherence relations between sentences inside the content, or between the content and tags, attached web-links, or attached multimedia. |
| | **Proximity** | **Has the report originated where and when it is claimed it originated / was produced?** |
| | | Comparison of the geo-temporal positions of the report and the event it is referring to. |

### Detailed Description of the Invention

Next the metrics introduced by "triple-C" method are presented. The table consists of the following fields:
- The pillar,
- The characteristic property described by each metric,
- The metric itself and
- The method through which the metric is calculated.

| Pillar | Modality | Metric | Method |
|---|---|---|---|
| Table-4: Contributor | **Reputation** | **M1:** Number of times material has been verified for this contributor. | Maintain lists of previously verified material which will act as a source credibility reference and will indicate the reputation of every contributor. Specific users are authorised to add a post to the list of verified material. The more times a source's material has been verified, the higher its reputation value is. |
| | **History** | **M2:** Frequency a source is updated. | Count how frequently a source is updated. Frequency calculation is based on the 100 more recent posts. Information retrieved through the social network's API. |
| | | **M3:** Number of posts the contributor has uploaded since the account was created. | How many posts has the contributor uploaded since the account was created retrieved through the social network's API. |
| | | **M4:** Number of posts the contributor has uploaded within the last six months. | How many posts has the contributor uploaded within the last six months. Retrieved through the social network's API, computed for the last 6 months. |
| | **Popularity** | **M5:** Number of followers/friends the contributor has. | Retrieved through the social network's API. |
| | | **M6:** Number of credible followers/friends the contributor has. | Credible are the followers who have posted verified material (i.e. metric M1>0). The number of credible followers is found by summing each credible follower multiplied by her/his M1. |
| | | **M7:** Number of positive mentions/responses the contributor has. | Sentiment analysis. |
| | | **M8:** Number of positive mentions/responses the contributor has from credible contributors. | Calculated using the AlethioMeter verification tables (as described in M1) and by performing aspect-based sentiment analysis. |
| | | **M9:** Number of negative mentions/responses the contributor has. | As in M7 with negative sentiment result. |
| | | **M10:** Number of negative mentions/responses the contributor has from credible contributors. | As in M8 with negative sentiment result. |
| | **Influence** | **M11:** Number of retweets/shares the contributor has. | Retrieved through the social network's API. |
| | | **M12:** Number of retweets/shares the contributor has from credible contributors. | As in M11, filtered through the AlethioMeter verification tables. |
| | | **M13:** 'Klout' influence score normalised in the 0-4 scale. | Retrieved through the Klout API. |
| | **Presence** | **M14:** Find if the contributor has accounts in more than one Social Media. | Accounts in more social media increase the chances that the source is credible. Identified by how many accounts are connected to the AlethioMeter and by text analysis on the user's profile on the accounts connected to the AlethioMeter to discover potential user's accounts that exist but are not connected to the AlethioMeter. |

| | | | |
|---|---|---|---|
| Table-5: Content | Reputation *(If a link is included)* | M15: Find the domain of referenced web site. | Compare against list of top-level domains which are considered to be credible (.gov, .edu, .police etc.). A credible domain receives the full score. |
| | | **M16:** Examine the domain registration of referenced web site. | Retrieved through *whois* services. A referenced site is considered to be credible if registration information is publicly available. |
| | | **M17:** Get the referenced web site's Google PageRank and Alexa Local Rank. | Retrieved through Alexa API and Google SEO tools. |
| | **History** *(If a link is included)* | **M18:** Examine the registration date of referenced web sites. | Retrieved through whois services. The older the registration, the better. |
| | | **M19:** Calculate how recently the referenced web site has been updated. | Calculated through the website's feed. The more recent the last update is, the better. |
| | **Originality** | **M20:** Find if the same image has been used again in the past. | If it is a new image, it receives the full score. Analysis through image analysis APIs. |
| | *(if multimedia are included)* | | |
| | **Authenticity** | **M21:** Find if an attached image has been tampered with. | If it is un-tampered, it receives the full score. Analysis through image analysis APIs. |
| | *(if multimedia are included)* | | |
| | **Proximity** | **M22:** Find if the attached multimedia was captured in the event location. | Examine the multimedia metadata. The closer to the event location, the higher the score. |
| | *(if multimedia are included)* | | |
| | | **M23:** Find if the attached multimedia was captured closely after the event. | Examine the multimedia metadata. The closer to the time if the event, the higher the score. |
| | | **M24:** Compare the weather conditions of the attached multimedia and event. | Having identified the location and time of the referenced event it with M23 and M25, it is sometimes possible to find the corresponding weather conditions of that location at that time. By image analysis it can be possible to a degree to determine the similarity of the actual weather conditions to what is seen in the image/video (e.g. sunshine or cloudy weather). If the weather conditions match, the full score is received. |

| | | | |
|---|---|---|---|
| Table-6: Context | Duplication | M25: Number of contributors that have reported the same event. | Event detection algorithms. The number of users reporting the event is calculated. |
| | | **M26:** Number of credible contributors that have reported the same event. | As in M25 with the addition that the users are filtered through the AlethioMeter verification tables to calculate the number of credible users that report the same event. |
| | **Provenance** | **M27:** Find if the current contributor is the originator of the information. | Thjs is essentially the M1 metric's value for the origin. |
| | **Popularity** | **M28:** Number of positive mentions/responses the post has. | Retrieved through sentiment analysis and the social network's API. |
| | | **M29:** Number of positive mentions/responses the post has from credible contributors. | As in M28 with the addition that the users are filtered through the AlethioMeter verification tables. |
| | | **M30:** Number of negative mentions/responses the post has. | As in M28 but for negative sentiment. |
| | | **M31:** Number of negative mentions/responses the post has from credible contributors. | As in M30 with the addition that the users are filtered through the AlethioMeter verification tables. |
| | **Influence** | **M32:** Number of retweets/shares the post has. | Retrieved through the social network's API. |
| | | **M33:** Number of retweets/shares the post has from credible contributors. | As in M32 with the addition that the users are filtered through the AlethioMeter verification tables. |
| | **Proximity** | **M34:** Find if the information was posted in the same location as the event it refers to. | The post's geo-location tag, if existing, is retrieved through the social network's API. The referenced event's location is extracted and compared to the geo-tag. The closer to the event the post appears to be, the higher the score it receives. |
| | | **M35:** Find if the information was posted closely after the event it refers to occurred. | The post's time-stamp is retrieved through the social network's API. The referenced event's time is extracted and compared to the time-stamp. The closer to the time of the event the post appears to be, the higher the score it receives. |

Depending on the metric, the following methods may be used to evaluate it:
1. Call(s) to the API of the referenced social network (Facebook, Twitter, Google+, LinkedIn, extensible to connect to more social networks) or other relevant service (Alexa, Klout etc.).
2. Use of the data structures maintained by the system in order to record and analyse the confirmed posts.
3. Sentiment analysis on the text of the posts shared in the social networks. Document-level as well as aspect-based sentiment analysis are used to identify the entity towards which the sentiment is expressed.
4. Extraction of entities (such as persons, locations, organizations etc.) mentioned in the posts.
5. Topics and events detection, using text analytics in combination with network meta-data such as temporal and geographical data if available.

The system consists of the following sub-systems:
- A Text Analytics (NLP) engine which analyses information emerging on social networks to extract sentiment, topics and events (including methods 3, 4 and 5 as described above),
- a Network Analytics engine which performs the relevant calculations to produce the scores (described in detail next) and processes temporal and network data (including method 5 above) for events extraction, trends and influence calculation,
- a social network integration sub-system used to receive data from social networks and other relevant services (including method 1 above),
- a storage sub-system that aggregates big-data and stores the persistent structured information (including method 2 above),
- and the master processor to orchestrate them.

Next, the value that is computed for each of the above metrics is mapped to an index taking discrete values of the fixed range 0 to 4 (quantization). In most cases this number is an integer in the range 0 to 4 or. In the cases that the metric has a logical value (true or false, e.g. M15, M20, M21 etc.) it is either 4 (the full score) or zero correspondingly. If a property is described by more than one metrics, then the final index is calculated as the average of these metrics.

For some metrics the score produced by the AlethioMeter is relative, e.g. the distance from the event in M34. The distances in km that map to different scores are set intuitively. In other cases however, in order to produce meaningful scores, AlethioMeter examines the emerging distribution and exploits its statistical properties. For example to calculate the score for M32 (the number of retweets/shares that a post receives) AlethioMeter examines the distribution of retweets/shares per tweet/post correspondingly on Twitter and Facebook on a very big dataset of actual data.

More particular the following distributions are examined:
- For each User U:
   ∘ Y₁(U): Timestamp ranges of the last 100 posts (M2).
   ∘ Y₂(U): User's account age in days (M3).
   ∘ Y₃(U): User's total number of posts (M3).
   ∘ Y₄(U): User's number of posts with timestamp < 6 months old (M4).
   ∘ Y₅(U): User's number of followers/friends (M5).
   ∘ Y₆(U): User's number of credible followers/friends (M6).
   ∘ Y₇(U): Total number of retweets/shares that U receives (M11).
   ∘ Y₈(U): Total number of retweets/shares that U receives from credible users (M12).
- For each Post P:
   ∘ Y₁(P): Number of retweets/shares of P (M32).
   ∘ Y₂(P): Number of retweets/shares of P by credible users (M33).
Depending on the emerging distribution AlethioMeter assigns a meaningful score. Diagram-2 (Drawings section) shows the process followed for computing the final score on a high level.

### This is explained better with the following example:

### Example

Calculation of M5 index for user U:
1. Calculate M5's raw value: First the number of followers for the particular user U is retrieved through the corresponding API(s) as determined by metric M5. Note that for different metrics the various methods that are summarized in the last fields of tables 4, 5 and 6 are used.
2. Distribution computation: The distribution for the particular metric is computed by the network analytics engine, big data analysis sub-module (depicted in diagram-1 in the Drawings section). The statistical properties of the observed emerging distribution are also computed: The mean, variance and percentiles are produced. This task is performed at predetermined intervals and its results are used for the purposes of the current step. For the particular metric M5 an example observed distribution (Twitter) is depicted in diagram-3 (Drawings section), as computed by the network analytics engine:
3. Quantization: M5 index is assigned the value 0,1,2,3 or 4 depending on the percentile of the observed distribution where the raw number falls:
   - 0-bottom 20% → score: 0
   - 20% - 40% → score: 1
   - 40% - 60% → score: 2
   - 60% - 80% → score: 3
   - Top 20% → score: 4
   For the observed distribution of the particular example the 5-percentiles and the corresponding scores are as follows:
   - 0 - 20%: 0 - 27 followers → score: 0
   - 20% - 40%: 28 - 83 followers → score: 1
   - 40% - 60%: 84 -182 followers → score: 2
   - 60% - 80%: 183 - 410 followers → score: 3
   - 80% -100%: over 410 followers → score: 4

## Claims

1. A system, namely "AlethioMeter", its sub-systems and the methods it runs to perform analytics in order to evaluate the use of social networks for informational purposes. It consists of:
• A Text Analytics (NLP) engine which analyses information emerging on social networks to extract sentiment, topics and events,
• a Network Analytics engine which performs the relevant calculations to produce the scores (described in detail next) and processes temporal and network data for trends and influence calculation,
• a social network integration sub-system used to receive data from social networks and other relevant services,
• a storage sub-system that aggregates big-data and stores the persistent structured information,
• and the master processor to orchestrate them.

2. The "triple-C" method for evaluating social networks use for informational purposes and estimating credibility based on the three pillars:
• Contributor: Metrics that measure the following modalities concerning the source of a post: Reputation, history, popularity, influence and presence.
• Content: Metrics that measure the following modalities of the content within a post: Reputation and history of the linked webpage, originality and authenticity of the multimedia content, proximity to the referenced event.
• Context: Metrics that measure co-occurrences, relationships and reactions to a post by measuring the following modalities: Duplication of references to the same event, provenance, popularity, influence and proximity.

3. More specifically the three pillars that measure the mentioned modalities with the following metrics, as evaluated by the NLP engine and the Network Analytics engine:
• Contributor, including metrics M1 through M14:
∘ **M1:** Number of times material has been verified for this contributor.
∘ **M2:** Frequency a source is updated.
∘ **M3:** Number of posts the contributor has uploaded since the account was created.
∘ **M4:** Number of posts the contributor has uploaded within the last six months.
∘ **M5:** Number of followers/friends the contributor has.
∘ **M6:** Number of credible followers/friends the contributor has.
∘ **M7:** Number of positive mentions/responses the contributor has.
∘ **M8:** Number of positive mentions/responses the contributor has from credible contributors.
∘ **M9:** Number of negative mentions/responses the contributor has.
∘ **M10:** Number of negative mentions/responses the contributor has from credible contributors.
∘ **M11:** Number of retweets/shares the contributor has.
∘ **M12:** Number of retweets/shares the contributor has from credible contributors.
∘ **M13:** 'Klout' influence score normalised in the 0-4 scale.
∘ **M14:** Find if the contributor has accounts in more than one Social Media.
• Content, including metrics M15 through M24:
∘ **M15:** Find the domain of referenced web site.
∘ **M16:** Examine the domain registration of referenced web site.
∘ **M17:** Get the referenced web site's Google PageRank and Alexa Local Rank.
∘ **M18:** Examine the registration date of referenced web sites.
∘ **M19:** Calculate how recently the referenced web site has been updated.
∘ **M20:** Find if the same image has been used again in the past.
∘ **M21:** Find if an attached image has been tampered with.
∘ **M22:** Find if the attached multimedia was captured in the event location.
∘ **M23:** Find if the attached multimedia was captured closely after the event.
∘ **M24:** Compare the weather conditions of the attached multimedia and event.
• Context, including metrics M25 through M35:
∘ **M25:** Number of contributors that have reported the same event.
∘ **M26:** Number of credible contributors that have reported the same event.
∘ **M27:** Find if the current contributor is the originator of the information.
∘ **M28:** Number of positive mentions/responses the post has.
∘ **M29:** Number of positive mentions/responses the post has from credible contributors.
∘ **M30:** Number of negative mentions/responses the post has.
∘ **M31:** Number of negative mentions/responses the post has from credible contributors.
∘ **M32:** Number of retweets/shares the post has.
∘ **M33:** Number of retweets/shares the post has from credible contributors.
∘ **M34:** Find if the information was posted in the same location as the event it refers to.
∘ **M35:** Find if the information was posted closely after the event it refers to occurred.

4. The following method for computing a score quantized in the range 0 to 4 (0 or 4 for metrics of logical true/false type): The metric's raw value is calculated using known methods which in our system are handled by AlethioMeter's integration layer, text analytics engine and network analytics engine, residing on the relevant computer systems. The observed distribution relative to each metric is computed periodically by AlethioMeter's big-data analysis engine on a large specimen of content from the Social Network under examination. Each computed percentile is mapped appropriately to a score between 0 and 4 (for the non-Boolean metrics), as follows: If the raw value lies within the computed distribution's:
• bottom 20% the metric is assigned score: 0,
• 20% - 40% the metric is assigned score: 1,
• 40% - 60% then the metric is assigned score: 2,
• 60% - 80% then the metric is assigned score: 3,
• top 20% then the metric is assigned score: 4.
For the logical metrics, a FALSE value scores 0 and a TRUE value scores 4.
